# EUROPEAN PATENT APPLICATION

(11) **EP 4 306 590 A1**
(43) Date of publication of application: **17.01.2024**
(21) Application number: 22766599.9
(22) Date of filing: 17.01.2022
(51) Int. Cl.: C08K 5/101, C08K 7/24, C08L 101/00

(54) **RESIN COMPOSITION AND MOLDED BODY**

(30) Priority: 10.03.2021 JP 2021038344
(71) Applicant: Mitsui Chemicals, Inc., Tokyo 104-0028 (JP)
(72) Inventor: YOSHII, Hiroaki, Sodegaura-shi, Chiba 299-0265 (JP)
(74) Representative: Hoffmann Eitle
(86) International application number: PCT/JP2022/001332
(87) International publication number: WO 2022/190631

(57) **Abstract**

Provided is: a resin composition including, as a phase change material, a heat storage compound that has process heat resistance adaptable to melt kneading at a relatively high temperature with a resin and that has characteristics not allowing the heat storage compound to leak from the resin when molded into a molded article, with the resin composition being capable of providing a molded article that has controllable thermosensitivity and is excellent in fracture resistance and light weight properties; and a molded article formed from the resin composition. A resin composition including: 100 parts by mass of a thermoplastic resin (A) having a density, a MFR, and durometer A hardness falling within certain ranges; 10 to 100 parts by mass of a heat storage compound (B) having a flash point of 200°C or higher; and 1.5 to 20 parts by mass of a porous inorganic compound (C) having an oil absorption of 4.0 g/g or more, in which the content of the heat storage compound (B) is less than 700 parts by mass based on the content of the porous inorganic compound (C) of 100 parts by mass.

## Description

### Technical Field

The present invention relates to a resin composition and a molded article, and more specifically to a thermoplastic resin composition with controllable thermosensitivity and a molded article thereof.

### Background Art

Conventionally, there has been a concept of adding a phase change material with a large calorific capacity to a resin so that a small change in temperature thereof is achieved even at a high temperature in the middle of summer or at a low temperature in the middle of winter, and hotness and coldness are unlikely to be felt on contact. This is because of the following mechanism: energy is consumed for phase transition (solid to liquid, liquid to solid), resulting in maintenance of the phase transition temperature for a certain period, thereby increase or decrease in temperature can be delayed. Examples based on such a concept include a sheet providing a cool sense, a material for suppressing increase in temperatures of a steering wheel and an instrument panel which become hot in a vehicle in summer, for example.

Patent Literature 1 discloses, as a resin composition including the above-described phase change material, a heat storage resin composition including: a thermoplastic resin having a quantity of heat of crystal fusion (ΔHm) of 100 J/g or less; and heat storage microcapsules, wherein the heat storage resin composition has a quantity of heat of crystal fusion (ΔHm) of 50 J/g or more.

In addition, Patent Literature 2 discloses a heat storage particles-containing resin pellet including: a thermoplastic resin; and heat storage material particles including a heat storage substance and being dispersed in the thermoplastic resin, wherein, for example, the particle diameter of the heat storage material particles satisfy specific conditions.

### Citation List

### Patent Literature

Patent Literature 1: JP2019-116570A
Patent Literature 2: JP2019-218518A

### Summary of Invention

### Technical Problem

Resin compositions containing a phase change material such as a heat storage compound are required to have high heat resistance according to application; however, the inventions of Patent Literatures 1 and 2 both have a problem of insufficient heat resistance because melting points of the thermoplastic resins thereof are not high. In addition, when a thermoplastic resin with high heat resistance is used, a phase change material and the thermoplastic resin are sometimes required to be melted and kneaded at a relatively high temperature (for example, a temperature of 200°C or higher), and the phase change material is thus required to have heat resistance so as to meet the processing temperature at which the phase change material is melted and kneaded with the resin. Furthermore, a molded article obtained is required to have characteristics not allowing the phase change material to leak (to bleed out) from the resin and required to have fracture resistance and light weight properties. However, such considerations have not been studied enough in conventional art.

An object of the present invention is to provide: a resin composition including, as a phase change material, a heat storage compound that has process heat resistance adaptable to melt kneading at a relatively high temperature with a resin and that has characteristics not allowing the heat storage compound to leak (to bleed out) from the resin when molded into a molded article, with the resin composition having controllable thermosensitivity and being capable of providing a molded article excellent in fracture resistance and light weight properties; and a molded article formed from the resin composition.

### Solution to Problem

The present inventors have investigated intensively to solve the above problems. As a result, the present inventors have found that a resin composition including a specific thermoplastic resin, a specific heat storage compound, and a specific porous inorganic compound in specific amounts can solve the above problems and completed the present invention. Examples of aspects of the present invention are shown below.

[1] A resin composition including:
   100 parts by mass of a thermoplastic resin (A) satisfying requirements (a-1) to (a-3) below;
   10 to 100 parts by mass of a heat storage compound (B) having a flash point of 200°C or higher and being different from the component (A); and
   1.5 to 20 parts by mass of a porous inorganic compound (C) having an oil absorption of 4.0 g/g or more, in which
   the content of the heat storage compound (B) is less than 700 parts by mass based on the content of the porous inorganic compound (C) of 100 parts by mass:
      (a-1) a density measured in accordance with a method described in ASTM D 1505 is within a range of 0.80 to 1.0 g/cm³;
      (a-2) a melt flow rate (MFR) measured at 230°C with a load of 10 kg in accordance with a method described in ISO 1133 is within a range of 0.1 to 100 g/10 min; and
      (a-3) durometer A hardness (momentary value) measured in accordance with a method described in ISO 7619 is within a range of 30 to 100.
[2] The resin composition according to item [1], in which the heat storage compound (B) is a fatty acid ester.
[3] The resin composition according to item [1] or [2], in which the porous inorganic compound (C) is at least one compound selected from the group consisting of silica, alumina, and carbon.
[4] The resin composition according to any one of items [1] to [3], in which the oil absorption of the porous inorganic compound (C) is 4.5 g/g or more and 10.0 g/g or less.
[5] The resin composition according to any one of items [1] to [4], in which the porous inorganic compound (C) is hydrophobic silica.
[6] The resin composition according to any one of items [1] to [5], in which a quantity of heat of crystal fusion ΔHm of the heat storage compound (B) is 150 J/g or more.
[7] The resin composition according to any one of items [1] to [6], in which the content of the porous inorganic compound (C) is 1.5 parts by mass or more and less than 14 parts by mass.
[8] A molded article formed from the resin composition according to any one of items [1] to [7].
[9] A method for producing the resin composition according to any one of items [1] to [7], including a step of kneading the thermoplastic resin (A), the heat storage compound (B), and the porous inorganic compound (C) at a temperature of 200°C or higher.

### Advantageous Effects of Invention

The resin composition of the present invention can be produced through melt kneading at a relatively high temperature (for example, a temperature of 200°C or higher). In addition, use of the resin composition of the present invention enables production of a molded article that has characteristics not allowing the heat storage compound (phase change material) to leak (to bleed out) from resin, has controllable thermosensitivity, and is excellent in fracture resistance and light weight properties.

### Description of Embodiments

The present invention will be described in detail hereinafter.

### [Resin composition]

A resin composition according to the present invention includes:
100 parts by mass of a thermoplastic resin (A) satisfying requirements (a-1) to (a-3) described below;
10 to 100 parts by mass of a heat storage compound (B) having a flash point of 200°C or higher and being different from the component (A); and
1.5 to 20 parts by mass of a porous inorganic compound (C) having an oil absorption of 4.0 g/g or more, in which
the content of the heat storage compound (B) is less than 700 parts by mass based on the content of the porous inorganic compound (C) of 100 parts by mass.

### <Thermoplastic resin (A)>

The thermoplastic resin (A) used in the present invention satisfies requirements (a-1) to (a-3) below.
(a-1) A density measured in accordance with the method described in ASTM D 1505 is within a range of 0.80 to 1.0 g/cm³.
(a-2) A melt flow rate (MFR) measured at 230°C with a load of 10 kg in accordance with the method described in ISO 1133 is within a range of 0.1 to 100 g/10 min.
(a-3) Durometer A hardness (momentary value) measured in accordance with the method described in ISO 7619 is within a range of 30 to 100.

The density in requirement (a-1) is preferably 0.81 to 0.97 g/cm³ and more preferably 0.82 to 0.94 g/cm³. When the density of the thermoplastic resin (A) falls within the above range, a molded article excellent in light weight properties can be obtained.

The MFR in requirement (a-2) is preferably 0.5 to 80 g/10 min and more preferably 1 to 50 g/10 min. When the MFR of the thermoplastic resin (A) falls within the above range, moldability of a resin composition obtained is excellent.

The durometer A hardness (momentary value) in requirement (a-3) is preferably 40 to 90, more preferably 40 to 85, and still more preferably 40 to 80. When the durometer A hardness (momentary value) of the thermoplastic resin (A) falls within the above range, embrittlement hardly occurs even when the porous inorganic compound (C) is added within the defined range.

Although the above-described thermoplastic resin (A) is not particularly limited as long as it is a thermoplastic resin satisfying requirements (a-1) to (a-3) above, examples thereof include an olefin-based resin, a styrene-based resin, an acrylic resin, a polyester-based resin, a polyvinyl chloride-based resin, a polyamide-based resin, a polycarbonate-based resin, a polylactic acid-based resin, a polyimide-based resin, a polysulfone-based resin, and an aromatic polyketone-based resin. These resins can be used singly or in combinations of two or more thereof, and commercially available products may be used. Among the above-described resins, an olefin-based resin is preferable, and an olefin-based thermoplastic elastomer is more preferable.

Preferable examples of the olefin-based thermoplastic elastomer include a dynamically crosslinked body of a polyolefin resin [II] and a copolymer [I] of ethylene, an α-olefin having 3 to 20 carbon atoms, and a non-conjugated polyene (hereinafter, also referred to as the "ethylene/α-olefin/non-conjugated polyene copolymer [I]").

The dynamically crosslinked body may be one obtained by dynamically crosslinking one kind of the ethylene/α-olefin/non-conjugated polyene copolymer [I] and one kind of the polyolefin resin [II] and may be one obtained by dynamically crosslinking multiple kinds of the ethylene/α-olefin/non-conjugated polyene copolymer [I] and multiple kinds of the polyolefin resin [II].

In the present specification, dynamical crosslinking refers to subjecting, to crosslinking reaction, at least part of carbon-carbon double bonds of the ethylene/α-olefin/non-conjugated polyene copolymer [I] by kneading the ethylene/α-olefin/non-conjugated polyene copolymer [I] and the polyolefin resin [II] in a melted state.

### - Ethylene/α-olefin/non-conjugated polyene copolymer [I]

The ethylene/α-olefin/non-conjugated polyene copolymer [I] includes a constituent unit (a) derived from ethylene, a constituent unit (b) derived from an α-olefin having 3 to 20 carbon atoms, and a constituent unit (c) derived from a non-conjugated polyene.

A content mole ratio (a)/(b) between the constituent unit (a) and the constituent unit (b) in the ethylene/α-olefin/non-conjugated polyene copolymer [I] is preferably 50/50 to 95/5, more preferably 60/40 to 80/20, and still more preferably 65/35 to 75/25.

On the other hand, a specific amount of the constituent unit (c) derived from a non-conjugated polyene in the ethylene/α-olefin/non-conjugated polyene copolymer [I] is preferably 2 to 20% by mass based on the total amount of the ethylene/α-olefin/non-conjugated polyene copolymer [I].

Specific examples of the α-olefin having 3 to 20 carbon atoms constituting the ethylene/α-olefin/non-conjugated polyene copolymer [I] include propylene, 1-butene, 4-methyl-1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-nonadecene, 1-eicosene, 9-methyl-1-decene, 11-methyl-1-dodecene, and 12-ethyl-1-tetradecene, for example.

Among these, propylene, 1-butene, 4-methyl-1-pentene, 1-hexene, and 1-octene are included. The ethylene/α-olefin/non-conjugated polyene copolymer [I] may include only one kind of the constituent unit (b) derived from the α-olefin and may include two or more kinds thereof.

The non-conjugated polyene constituting the ethylene/α-olefin/non-conjugated polyene copolymer [I] may be a compound having no conjugate structure and having two or more carbon-carbon double bonds. Specific examples thereof include linear non-conjugated dienes such as 1,4-hexadiene, 3-methyl-1,4-hexadiene, 4-methyl-1,4-hexadiene, 5-methyl-1,4-hexadiene, 4,5-dimethyl-1,4-hexadiene, 7-methyl-1,6-octadiene, 8-methyl-4-ethylidene-1,7-nonadiene, and 4-ethylidene-1,7-undecadiene; cyclic non-conjugated dienes such as methyl tetrahydro indene, 5-ethylidene-2-norbornene, 5-methylene-2-norbornene, 5-isopropylidene-2-norbornene, 5-vinylidene-2-norbornene, 6-chloromethyl-5-isopropenyl-2-norbornene, 5-vinyl-2-norbornene, 5-isopropenyl-2-norbornene, 5-isobutenyl-2-norbornene, cyclopentadiene, and norbornadiene; and trienes such as 2,3-diisopropylidene-5-norbornene, 2-ethylidene-3-isopropylidene-5-norbornene, 2-propenyl-2,2-norbornadiene, and 4-ethylidene-8-methyl-1,7-nanodiene.

Among these non-conjugated polyenes, 5-ethylidene-2-norbornene (ENB) and 5-vinyl-2-norbornene (VNB) are particularly preferable. The ethylene/α-olefin/non-conjugated polyene copolymer [I] may include only one kind of the constituent unit (c) derived from the non-conjugated polyene and may include two or more kinds thereof.

The ethylene/α-olefin/non-conjugated polyene copolymer [I] may be so-called oil extended rubber to which a softening agent, preferably a mineral oil-based softening agent has been added during production thereof. The mineral oil-based softening agent may be a conventionally-known mineral oil-based softening agent, and examples thereof include paraffin-based process oil.

The ethylene/α-olefin/non-conjugated polyene copolymer [I] can be produced by a conventionally-known method.

### - Polyolefin resin [II]

The polyolefin resin [II] may be a polyolefin-based resin having substantially no unsaturated bond in the main chain thereof. Specific examples thereof include homopolymers of α-olefins such as ethylene, propylene, 1-butene, 1-pentene, 1-hexene, 4-methyl-1-pentene, 1-octene, and 1-decene; and copolymers thereof. When the polyolefin resin [II] is a copolymer, it is preferable that the content of any one kind of α-olefins be 90 mol% or more.

In particular, a propylene-based polymer (II-1) containing propylene as a main component or an ethylene-based polymer (II-2) containing ethylene as a main component is particularly preferable as the polyolefin resin [II].

Examples of the propylene-based polymer (II-1) include homopolymers of propylene; random copolymers of propylene with an α-olefin having 2 to 10 carbon atoms (for example, ethylene, 1-butene, 1-pentene, and 4-methyl-1-pentene); and block copolymers of a propylene homopolymer and an amorphous or low crystalline propylene-ethylene random copolymer, for example. Provided that, it is preferable that the amount of constituent units other than propylene be 10 mol% or less based on the total amount of constituent units.

The propylene-based polymer (II-1) may be a polymer polymerized by a known polymerization method and may be a polymer produced and sold as polypropylene resin.

Furthermore, although the propylene-based polymer (II-1) preferably has an isotactic steric structure, the propylene-based polymer (II-1) may have a syndiotactic structure or a mixed structure thereof, or a structure partially including an atactic structure.

On the other hand, examples of the ethylene-based polymer (II-2) include ethylene homopolymers; and random copolymers of ethylene with an α-olefin having 3 to 10 carbon atoms (for example, propylene, 1-butene, 1-pentene, and 4-methyl-1-pentene). In the ethylene-based polymer (II-2), it is preferable that the amount of constituent units other than ethylene be 10 mol% or less based on the total amount of constituent units.

The ethylene-based polymer (II-2) may be a polymer polymerized by a known polymerization method and may be a polymer produced and sold as high pressure low density polyethylene, linear low density polyethylene, and high density polyethylene, for example.

### - Method for preparing dynamically crosslinked body

The dynamically crosslinked body can be prepared by kneading (dynamically crosslinking) the ethylene/α-olefin/non-conjugated polyene copolymer [I] and the polyolefin resin [II] described above, with a known crosslinking agent, a crosslinking aid, and a softening agent added thereto as needed. Commercially available products may also be used. While either a non-open-type device or an open-type device may be used for dynamic crosslinking, a non-open-type device is preferably used.

Dynamic crosslinking is preferably carried out in an inert gas atmosphere such as nitrogen and carbon dioxide gas. A temperature at which dynamic crosslinking is carried out usually ranges from a melting point of the polyolefin resin [II] to 300°C, preferably from 150°C to 270°C, and more preferably from 170°C to 250°C. A kneading time is preferably from 1 to 20 minutes and more preferably from 1 to 10 minutes. Shearing speed at this time is preferably 10 to 50,000 sec⁻¹ and more preferably 100 to 20,000 sec⁻¹.

Examples of kneading devices used for dynamic crosslinking include mixing rolls, intensive mixers (for example, a Banbury mixer and a kneader), and uniaxial and coaxial extruders, for example, a non-open-type device is preferable, and a coaxial extruder is particularly preferable.

### <Heat storage compound (B)>

The heat storage compound (B) used in the present invention is used as a phase change material and is a compound having a flash point of 200°C or higher, preferably 210°C or higher and 300°C or lower, more preferably 220°C or higher and 290°C or lower, and still more preferably 220°C or higher and 280°C or lower (provided that the heat storage compound (B) is a compound other than the component (A)). When the flash point falls within the above range, the heat storage compound (B) can be included in a resin composition without being thermally decomposed even when the heat storage compound (B) is melted and kneaded with, for example, the component (A) at a high temperature of 200°C or higher, and an excellent phase transition effect can be exerted.

The quantity of heat of crystal fusion ΔHm of the heat storage compound (B) is preferably 150 J/g or more, more preferably 180 J/g or more and 300 J/g or less, still more preferably 210 J/g or more and 290 J/g or less, and particularly preferably 210 J/g or more and 280 J/g or less. When the quantity of heat of crystal fusion ΔHm of the heat storage compound (B) falls within the above range, the above-described effects are enhanced.

Examples of the above-described heat storage compound (B) include a compound having a chain structure that has no ring and no multiple bond and is not bulky, a compound having a structure having a hydrocarbon, and a compound having a structure that has a hydrogen bond unit such as a carbonyl group or a hydroxy group. More specific examples include fatty acid esters, aliphatic alcohols, and fatty acids, for example, and fatty acid esters are preferable, and a fatty acid ester in which substituents on both ester terminals are linear is more preferable, among them.

Examples of the fatty acid esters include isocetyl myristate, octyldodecyl myristate, isocetyl isostearate, cetyl 2-ethylhexanoate, isocetyl stearate, 2-ethylhexyl palmitate, isotridecyl stearate, butyl stearate, dodecyl stearate, myristyl myristate, cetyl myristate, hexadecyl palmitate, stearyl stearate, and docosyl docosanoate, for example. Among them, stearyl stearate, myristyl myristate, cetyl myristate, and docosyl docosanoate are preferable.

Aliphatic alcohols having 20 or more carbon atoms are preferable as the aliphatic alcohols, and examples thereof include behenyl alcohol. Fatty acids having 20 or more carbon atoms are preferable as the fatty acids, and examples thereof include behenic acid.

An appropriately selected compound can be used as the heat storage compound (B) according to a desired phase transition temperature (retention temperature), and one compound may be used alone, or two or more compounds may be used in combination.

### <Porous inorganic compound (C)>

An oil absorption of the porous inorganic compound (C) used in the present invention is 4.0 g/g or more, preferably 4.5 g/g or more and 10.0 g/g or less, more preferably 5.0 g/g or more and 9.5 g/g or less, and still more preferably 5.0 g/g or more and 9.0 g/g or less. When the oil absorption of the porous inorganic compound (C) falls within the above range, a larger amount of the heat storage compound (B) can be retained, and thus bleed-out meaning that the heat storage compound (B) leaks from a resin when molded into a molded article can be prevented.

An average particle diameter of the porous inorganic compound (C) is preferably 1 um or more and 100 um or less. When the average particle diameter of the porous inorganic compound (C) falls within the above range, the above-described effects are enhanced. The average particle diameter is a value measured with a device and an analysis method suitable for particle diameters, and a value measured by a laser diffraction/scattering method, for example.

The porous inorganic compound (C) is not particularly limited as long as it has the above oil absorption; however, in view of having excellent heat resistance, examples thereof include silica, alumina, and carbon. These may be used singly or in combinations of two or more thereof. Silica is preferable among these, and in view of further enhancing an oil absorption effect, hydrophobic silica is more preferable.

Preferable as the porous inorganic compound (C) is a compound that makes the heat storage compound (B) less volatile and less ignitable compared with the heat storage compound (B) alone when the temperature becomes equal to or more than the melting point (melting peak temperature) of the heat storage compound (B) in a state of holding the heat storage compound (B). Examples of such a preferable porous inorganic compound (C) include "AEROS" manufactured by THILIUM Co., Ltd.

### <Composition>

Contents of the respective components in the resin composition of the present invention based on 100 parts by mass of the thermoplastic resin (A) are as follows:
a content of the heat storage compound (B) is 10 to 100 parts by mass, preferably 12 to 80 parts by mass, and more preferably 15 to 50 parts by mass; and
a content of the porous inorganic compound (C) is 1.5 to 20 parts by mass, preferably 2.0 to 18 parts by mass, and more preferably 2.5 to 16 parts by mass. In addition, the content of the porous inorganic compound (C) may be 1.5 parts by mass or more and less than 14 parts by mass, 2.0 parts by mass or more and less than 14 parts by mass, or 2.5 parts by mass or more and less than 14 parts by mass.

The content of the heat storage compound (B) is less than 700 parts by mass, preferably 100 parts by mass or more and less than 700 parts by mass, and more preferably 200 parts by mass or more and less than 700 parts by mass, based on the content of the porous inorganic compound (C) of 100 parts by mass.

When the contents of the respective components satisfy the above conditions, the heat storage compound (B) does not leak (bleed out) from a resin when molded into a molded article, a sufficient phase transition effect can be obtained, and a molded article excellent in fracture resistance and light weight properties can be obtained.

### <Optional components>

The resin composition of the present invention may contain, as optional components, additives such as a slipping agent, a nucleating agent, a filler, an antioxidant, a weathering stabilizer, a colorant (including a thermochromic material), a foaming agent, a pigment, a dye, an antistatic agent, and a flame retarder within a range not impairing the effects of the present invention, besides the components (A) to (C) described above.

### <Resin composition production method>

A method for producing the resin composition of the present invention has a step of kneading the thermoplastic resin (A), the heat storage compound (B), the porous inorganic compound (C), and an optional arbitrary component at a temperature of 200°C or higher, preferably 210°C or higher and 300°C or lower, more preferably 220°C or higher and 260°C or lower. A kneading time is usually 1 to 20 minutes and preferably 1 to 10 minutes.

A mixing roll, an intensive mixer (for example, a Banbury mixer or a kneader), and a uniaxial or coaxial extruder, can be used as a kneading device, for example, and a non-open-type device is preferable.

### [Molded article]

A molded article of the present invention is formed from the above-described resin composition of the present invention. Various known methods can be employed as a molding method. Specifically, extrusion, press molding, injection molding, calendering, and blow molding are exemplified. In addition, a molded article such as a sheet obtained through any of the above-described molding methods can also be subjected to fabrication by, for example, thermoforming, or can be laminated with another material to form a molded article.

Although uses of the molded article of the present invention are not particularly limited, various known uses such as automobile components, civil engineering and architectural materials, electrical and electronic components, hygiene products, films and sheets, and foamed bodies are suitable, for example. In particular, the molded article of the present invention is useful as a material for steering wheels and instrument panels which become hot in a vehicle in summer, wearable materials, apparel materials, shoes, various cooling materials, cold boxes, warming materials, and warming containers.

### Examples

Hereinafter, the present invention will be more specifically described on the basis of examples. However, the present invention is not limited to these examples at all.

### [Materials]

Components for the resin compositions produced in Examples and Comparative Examples are as follows.

### <Thermoplastic resin>

- A-1: "Milastomer 6010NST" (a crosslinked-type thermoplastic elastomer mainly containing olefin-based rubber (EPT) and olefin-based resin (PP); density: 0.88 g/cm³; MFR (230°C, load 10 kg): 12 g/10 min; durometer A hardness (momentary value): 70) manufactured by Mitsui Chemicals, Inc.
- A'-2: Polyvinyl chloride (density: 1.2 g/cm³; durometer A hardness (momentary value): 70)

### <Heat storage compound (phase change material)>

- B-1: "EXEPARL SS" (stearyl stearate; flash point: 258°C; ΔHm: 234 J/g) manufactured by Kao Corporation
- B-2: "EXEPARL MY-M" (myristyl myristate; flash point: 239°C; ΔHm: 229 J/g) manufactured by Kao Corporation
- B-3: "SPERMACETI" (cetyl myristate; flash point: 228°C; ΔHm: 241 J/g) manufactured by NOF CORPORATION
- B-4: "UNISTER M-2222SL" (docosyl docosanoate; flash point: 270°C; ΔHm: 224 J/g) manufactured by NOF CORPORATION
- B'-5: "Octadecane" (flash point: 154°C) manufactured by FUJIFILM Wako Pure Chemical Corporation
- B'-6: Melamine capsule "PMCD-28SP" (flash point: 160°C) manufactured by Mikiriken Industrial Co., Ltd.

### <Porous inorganic material>

- C-1: Hydrophobic silica ("AEROS" manufactured by THILIUM Co., Ltd., oil absorption; 7 g/g)
- C'-2: Activated carbide ("SUMILAY" manufactured by TANIGUCHI SHOKAI Inc., oil absorption; 3.4 g/g)

### [Examples 1 to 6 and Comparative Examples 1 to 14]

The thermoplastic resin, heat storage compound (phase change material), and porous inorganic material in the amounts shown in Table 1 (parts by mass) were kneaded, for five minutes, at a temperature of 240°C and a torque rotational speed of 30 rpm using Labo Plastomill ("80C100" manufactured by Toyo Seiki Seisaku-sho, Ltd.). The kneaded product was promptly collected after kneading. The obtained kneaded product was cut, with scissors, into small pieces of about 0.5 cm × 0.5 cm × 0.5 cm.

A Teflon (R) sheet and a mold were sequentially placed on a stainless steel plate (hereinafter, also referred to as a "SUS plate"), and the hole part of the mold was paved with the cut pieces as obtained above. After paving the mold with the cut pieces, a Teflon (R) sheet and a SUS plate were sequentially stacked thereon. The Teflon (R) sheets were used so that the kneaded product did not attach to the SUS plates through hot pressing. Molds with a length of 6.5 cm, a width of 6.5 cm, and different three thicknesses (1 mm, 2 mm, and 5 mm) were used as the above mold.

The obtained stacked product was hot pressed at a temperature of 240°C and a pressure of 10 MPa for five minutes with a compression molding machine ("ASF-10" manufactured by Sinto Metal Industries, Ltd.). Thereafter, the stacked product was promptly moved to a compression molding machine ("NSF-37" manufactured by Sinto Metal Industries, Ltd.) in the state of being sandwiched by the SUS plates, and cooled at a pressure of 10 MPa for five minutes. After cooling, the SUS plates and the Teflon (R) sheets were removed from the mold, and each hot pressed sheet sample with the thickness shown in Table 1 was obtained. The produced hot-pressed sheet samples were subjected to the following evaluations.

### <Bleed-out>

The upper side and the lower side of each of the hot-pressed sheet samples obtained above were sandwiched by clean paper such that the surface of 6.5 cm × 6.5 cm and the clean paper became parallel, and the upper side and the lower side thereof were further sandwiched by SUS plates, followed by hot pressing under conditions with a temperature of 100°C and a pressure of 10 MPa for five minutes with a compression molding machine ("ASF-10" manufactured by Sinto Metal Industries, Ltd.). After hot pressing, the hot-pressed sheet sample was promptly peeled from the clean paper. The condition of the clean paper was checked and rated as "O: without leakage" when no trace was found in the area in which the sheet was placed and as "X: with leakage" when a trace was found.

### <Fracture resistance>

Each of the hot-pressed sheet samples obtained above was cut into a test piece for a tensile test having a size with a length of 1.0 cm and a width of 6.5 cm, and the tensile elongation of the test piece was measured under the conditions with a tensile speed of 300 mm/minute and a distance between chucks of 50 mm using TENSILON universal testing machine (model: RTG-1225). The tensile elongation value obtained when the test piece was broken was evaluated according to the following criteria on the basis of the measured elongation rate, with elongation rate (%) = elongation value (mm)/distance between chucks (mm).
O: greater than 10%
Δ: 5% to 10%
X: less than 5%

### <Heat retention properties>

About 5 mg was cutout from each of the hot-pressed sheet samples obtained above, and measurement was conducted thereon under the following conditions using a differential scanning calorimeter (DSC).
- Measurement device: X-DSC7000 (manufactured by SII)
- Temperature: starting from -40°C, the temperature was increased to 100°C, kept at 100°C for one minute, and subsequently decreased to -40°C
- Temperature increase rate and temperature decrease rate: both 3°C/minute
- Measurement atmosphere: nitrogen
- Pretreatment: none
- Pan: simple sealed pan

Information on the fusion enthalpy ΔH (J/g) of each heat storage compound (phase change material) was obtained from the fusion peaks obtained through measurement. Evaluation was made according to the following criteria on the basis of the obtained ΔH values.
O: larger than 50 J/g
Δ: 25 to 50 J/g
X: less than 25 J/g

### <Light weight properties>

The weight of each of the hot-pressed sheet samples obtained above was measured with a precision balance, and a value obtained by dividing the weight by the volume of the obtained hot-pressed sheet was taken as the density thereof. Evaluation was made according to the following criteria on the basis of the obtained density values.
O: less than 0.9 g/cm³
Δ: 0.9 g/cm³ or more and less than 1 g/cm³
X: 1 g/cm³ or more

### <Comprehensive evaluation>

Those rated as X in at least one of the above evaluations were rated as X (unsuitable) in comprehensive evaluation.

### [Table 1]

**Table 1**

| | | | | | Examples | | | | | | | | | | | |
|---|---|---|---|---|---|---|---|---|---|---|---|---|---|---|---|---|
| | | | | | 1 | | 2 | | 3 | | 4 | | 5 | | 6 | |
| Composition (parts by mass) | | Thermoplastic resin | | A-1 | 100 | | 100 | | 100 | | 100 | | 100 | | 100 | |
| | | | | A'-2 | 0 | | 0 | | 0 | | 0 | | 0 | | 0 | |
| | | Heat storage compound | | B-1 | 42 | | 0 | | 0 | | 0 | | 42 | | 21 | |
| | | | | B-2 | 0 | | 42 | | 0 | | 0 | | 0 | | 0 | |
| | | | | B-3 | 0 | | 0 | | 42 | | 0 | | 0 | | 0 | |
| | | | | B-4 | 0 | | 0 | | 0 | | 42 | | 0 | | 0 | |
| | | | | B'-5 | 0 | | 0 | | 0 | | 0 | | 0 | | 0 | |
| | | | | B'-6 | 0 | | 0 | | 0 | | 0 | | 0 | | 0 | |
| | | Porous inorganic compound | | C-1 | 7 | | 7 | | 7 | | 7 | | 13 | | 3.5 | |
| | | | | C'-2 | 0 | | 0 | | 0 | | 0 | | 0 | | 0 | |
| | | B/CorC' 100 parts by mass | | | 600 | | 600 | | 600 | | 600 | | 323 | | 600 | |
| Design | | Sheet thickness | | mm | 1 | | 1 | | 1 | | 1 | | 1 | | 2 | |
| Evaluation results on hot-pressed products | | Bleed-out | | | ○ | | ○ | | ○ | | ○ | | ○ | | ○ | |
| | | Fracture resistance | | | ○ | | ○ | | ○ | | ○ | | Δ | | ○ | |
| | | Heat retention properties | | | ○ | | ○ | | ○ | | ○ | | ○ | | Δ | |
| | | Light weight properties | | | ○ | | ○ | | ○ | | ○ | | ○ | | ○ | |
| Comprehensive evaluation | | | | | ○ | | ○ | | ○ | | ○ | | ○ | | ○ | |

| | | | Comparative Examples | | | | | | | | | | | | | |
|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 |
| Composition (parts by mass) | Thermoplastic resin | A-1 | 100 | 100 | 100 | 100 | 100 | 100 | 100 | 100 | 100 | 100 | 0 | 0 | 100 | 100 |
| | | A'-2 | 0 | 0 | 0 | 0 | 0 | 0 | 0 | 0 | 0 | 0 | 100 | 100 | 0 | 0 |
| | Heat storage compound | B-1 | 42 | 42 | 8.4 | 0 | 42 | 42 | 42 | 26 | 25 | 11 | 42 | 60 | 0 | 0 |
| | | B-2 | 0 | 0 | 0 | 0 | 0 | 0 | 0 | 0 | 0 | 0 | 0 | 0 | 0 | 0 |
| | | B-3 | 0 | 0 | 0 | 0 | 0 | 0 | 0 | 0 | 0 | 0 | 0 | 0 | 0 | 0 |
| | | B-4 | 0 | 0 | 0 | 0 | 0 | 0 | 0 | 0 | 0 | 0 | 0 | 0 | 0 | 0 |
| | | B'-5 | 0 | 0 | 0 | 0 | 0 | 0 | 0 | 0 | 0 | 0 | 0 | 0 | 42 | 0 |
| | | B'-6 | 0 | 0 | 0 | 0 | 0 | 0 | 0 | 0 | 0 | 0 | 0 | 0 | 0 | 42 |
| | Porous inorganic compound | C-1 | 6 | 21 | 1.4 | 0 | 0 | 0 | 0 | 0 | 0 | 0 | 7 | 10 | 7 | 0 |
| | | C'-2 | 0 | 0 | 0 | 0 | 0 | 20 | 21 | 13 | 12.5 | 5.5 | 0 | 0 | 0 | 0 |
| | B/CorC' 100 parts by mass | | 700 | 200 | 600 | - | - | 210 | 200 | 200 | 200 | 200 | 600 | 600 | 600 | - |
| Design | Sheet thickness | mm | 1 | 1 | 5 | 1 | 1 | 1 | 1 | 1 | 1 | 1 | 1 | 1 | Fail to produce | |
| Evaluation results on hot-pressed products | Bleed-out | | X | ○ | ○ | ○ | X | X | ○ | ○ | ○ | ○ | X | X | - | - |
| | Fracture resistance | | ○ | X | ○ | ○ | ○ | X | X | X | X | ○ | ○ | ○ | - | - |
| | Heat retention properties | | ○ | ○ | X | X | ○ | ○ | ○ | ○ | Δ | X | ○ | ○ | - | - |
| | Light weight properties | | ○ | ○ | ○ | ○ | ○ | ○ | ○ | ○ | ○ | ○ | X | Δ | - | - |
| Comprehensive evaluation | | | X | X | X | X | X | X | X | X | X | X | X | X | X | X |

The comprehensive evaluation results in Examples 1 to 6 were "O," but the comprehensive evaluation results in Comparative Examples were all "X." Note that in Comparative Examples 13 and 14, the heat storage compounds (phase change materials) volatilized during production of hot-pressed sheet samples, hot-pressed sheet samples could not be produced, and evaluations could not be made; therefore, comprehensive evaluation results for Comparative Examples 13 and 14 were "X."

## Claims

1. A resin composition comprising:
100 parts by mass of a thermoplastic resin (A) satisfying requirements (a-1) to (a-3) below;
10 to 100 parts by mass of a heat storage compound (B) having a flash point of 200°C or higher and being different from the component (A); and
1.5 to 20 parts by mass of a porous inorganic compound (C) having an oil absorption of 4.0 g/g or more, wherein
a content of the heat storage compound (B) is less than 700 parts by mass based on a content of the porous inorganic compound (C) of 100 parts by mass:
(a-1) a density measured in accordance with a method described in ASTM D 1505 is within a range of 0.80 to 1.0 g/cm³;
(a-2) a melt flow rate (MFR) measured at 230°C with a load of 10 kg in accordance with a method described in ISO 1133 is within a range of 0.1 to 100 g/10 min; and
(a-3) durometer A hardness (momentary value) measured in accordance with a method described in ISO 7619 is within a range of 30 to 100.

2. The resin composition according to claim 1, wherein the heat storage compound (B) is a fatty acid ester.

3. The resin composition according to claim 1 or 2, wherein the porous inorganic compound (C) is at least one compound selected from the group consisting of silica, alumina, and carbon.

4. The resin composition according to any one of claims 1 to 3, wherein the oil absorption of the porous inorganic compound (C) is 4.5 g/g or more and 10.0 g/g or less.

5. The resin composition according to any one of claims 1 to 4, wherein the porous inorganic compound (C) is hydrophobic silica.

6. The resin composition according to any one of claims 1 to 5, wherein a quantity of heat of crystal fusion ΔHm of the heat storage compound (B) is 150 J/g or more.

7. The resin composition according to any one of claims 1 to 6, wherein the content of the porous inorganic compound (C) is 1.5 parts by mass or more and less than 14 parts by mass.

8. A molded article formed from the resin composition according to any one of claims 1 to 7.

9. A method for producing the resin composition according to any one of claims 1 to 7, comprising a step of kneading the thermoplastic resin (A), the heat storage compound (B), and the porous inorganic compound (C) at a temperature of 200°C or higher.
